# EUROPEAN PATENT APPLICATION

(11) **EP 4 807 521 A1**
(43) Date of publication of application: **16.09.2026**
(21) Application number: 26163450.5
(22) Date of filing: 10.03.2026
(51) Int. Cl.: G06F 3/12

(54) **METHOD OF STORING PRINT DATA AND PRINT DATA STORAGE APPARATUS**

(30) Priority: 12.03.2025 JP 2025039755
(71) Applicant: Sharp Kabushiki Kaisha, Sakai City, Osaka 590-8522 (JP)
(72) Inventor: KODAMA, Naoki, Osaka, 590-8522 (JP)
(74) Representative: Müller Hoffmann & Partner

(57) **Abstract**

A method of storing print data according to the present disclosure includes: acquiring print data, and at least one of first identification information and second identification information associated with the print data, the second identification information being different from the first identification information; distributing the print data acquired to a first folder in accordance with a predetermined distribution rule based on the identification information acquired; and storing the print data in the first folder.

## Description

### CROSS-REFERENCE TO RELATED APPLICATION

The present application claims priority from Japanese Application JP2025-039755, the content to which is hereby incorporated by reference into this application.

### BACKGROUND OF THE INVENTION

### 1. Field of the Invention

The present disclosure relates to a method of storing print data and the like.

### 2. Description of the Related Art

Some image forming apparatuses such as multifunction apparatuses are provided with a function of storing print data received as a print job in a storage apparatus such as a storage (hereinafter, this function may be referred to as a hold function), and can print the stored print data through an operation panel of the image forming apparatus without using an information processing apparatus such as a personal computer (PC) as needed. Note that in the present disclosure, a mode of recording or temporarily holding information such as print data in a storage apparatus may be referred to as "storing".

For example, JP2012-254618A discloses an image forming apparatus that automatically generates a user folder based on a user name included in bibliographic information of print data received from a PC, and stores the received print data in the generated folder.

### SUMMARY OF THE INVENTION

An object of the present disclosure is to provide a method of storing print data and the like that can improve user convenience in storing print data in a function for storing print data in a storage.

To solve the above-mentioned problems, a method of storing print data according to the present disclosure includes: acquiring print data, and at least one of first identification information and second identification information associated with the print data, the second identification information being different from the first identification information; distributing the print data acquired to a first folder in accordance with a predetermined distribution rule based on the identification information acquired; and storing the print data in the first folder.

In addition, a print data storage apparatus according to the present disclosure includes: one or more controllers; and a storage, wherein the one or more controllers acquire print data, and at least one of first identification information and second identification information associated with the print data, the second identification information being different from the first identification information; distribute the print data acquired to a first folder stored in the storage in accordance with a predetermined distribution rule based on the identification information acquired; and store the print data in the first folder.

According to the present disclosure, it is possible to provide a method of storing print data and the like that can improve user convenience in storing print data in a function for storing print data in a storage.

### BRIEF DESCRIPTION OF THE DRAWINGS

FIG. 1 is a diagram for describing a connection mode of a multifunction apparatus according to a first embodiment and a PC.
FIG. 2 is a perspective view of an external appearance for describing a general configuration of the multifunction apparatus according to the first embodiment.
FIG. 3 is a diagram illustrating a functional configuration of the multifunction apparatus according to the first embodiment.
FIG. 4 is a diagram for describing a data configuration of a print job.
FIG. 5 is a flowchart for describing a flow of processing according to the first embodiment.
FIG. 6 is a flowchart for describing a flow of processing according to the first embodiment.
FIG. 7 is a diagram for describing a distribution rule according to the first embodiment.
FIG. 8 is a flowchart for describing a flow of processing according to the first embodiment.
FIG. 9 is a flowchart for describing a flow of processing according to the first embodiment.
FIG. 10 is a diagram for describing an operation example according to the first embodiment.
FIG. 11 is a diagram for describing an operation example according to the first embodiment.
FIG. 12 is a diagram for describing an operation example according to the first embodiment.
FIG. 13 is a diagram for describing an operation example according to the first embodiment.
FIG. 14 is a diagram for describing an operation example according to the first embodiment.
FIG. 15 is a diagram for describing an operation example according to the first embodiment.
FIG. 16 is a diagram for describing an operation example according to the first embodiment.
FIG. 17 is a diagram for describing an operation example according to the first embodiment.
FIG. 18 is a flowchart for describing a flow of processing according to a second embodiment.

### DETAILED DESCRIPTION OF THE INVENTION

Hereinafter, embodiments of the present disclosure will be described with reference to the drawings. The embodiments described below are merely examples for describing the present disclosure, and the technical contents described in the claims are not limited to the following descriptions.

As one aspect of a hold function, there is known a mechanism in which, without performing user authentication, a storage destination of print data is identified based on print data transmitted from a user terminal to an image forming apparatus such as a multifunction apparatus, and the received print data is stored in a user folder identified as the storage destination. As a method of identifying the storage destination of the print data, for example, there is a method in which a user folder for storing the print data is identified based on a user name (login name), a computer name, or a combination of the user name (login name) and the computer name acquired from the user terminal that is the transmission source of the print data.

However, depending on the type of operating system (OS) of the user terminal that transmits the print data, sufficient information for identifying the storage destination of the print data may not be obtained. In addition, in environments where a single user terminal is shared by a plurality of users or a plurality of user terminals are used with a shared account, it may not be possible to identify the user folder for storing the print data based on the user name (login name) or the computer name.

In the present disclosure, a method of storing print data and the like that can improve user convenience in storing print data in a hold function serving as a function for storing print data in a storage is achieved in the following embodiments.

### 1. First Embodiment

In a first embodiment, as a mechanism for achieving a My Hold Print function that does not depend on the user authentication, at least one of user identification information serving as the first identification information and apparatus identification information serving as the second identification information is acquired, and, based on the acquired identification information, the print data corresponding to the identification information is distributed and stored in a user folder serving as a first folder in accordance with a predetermined distribution rule.

In the first embodiment, an example is described in which a print data storage apparatus that implements the method of storing print data according to the present disclosure is applied to a multifunction apparatus. The multifunction apparatus is an image forming apparatus capable of executing jobs such as copying, scanning, faxing, and email transmission in a single housing, and is capable of printing an image (color image or monochrome image) based on print data received as a print job onto a medium such as sheets.

### 1.1 General Configuration

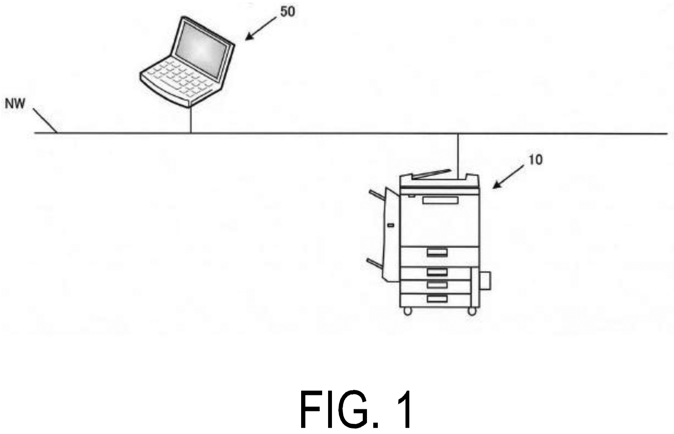

FIG. 1 is a diagram for describing an example of a connection mode of a multifunction apparatus 10 and a PC 50 serving as a terminal device. The multifunction apparatus 10 and the PC 50 are configured to be capable of mutual communication through a network NW. The multifunction apparatus 10 can receive print data transmitted from the PC 50 as a print job, and print an image onto a medium such as a sheet based on the print data.

### 1.2 Functional Configuration of Multifunction Apparatus 10

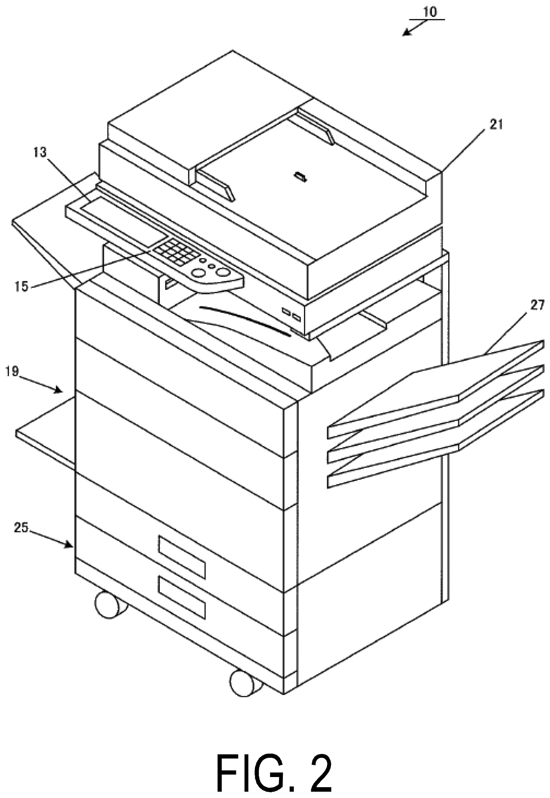

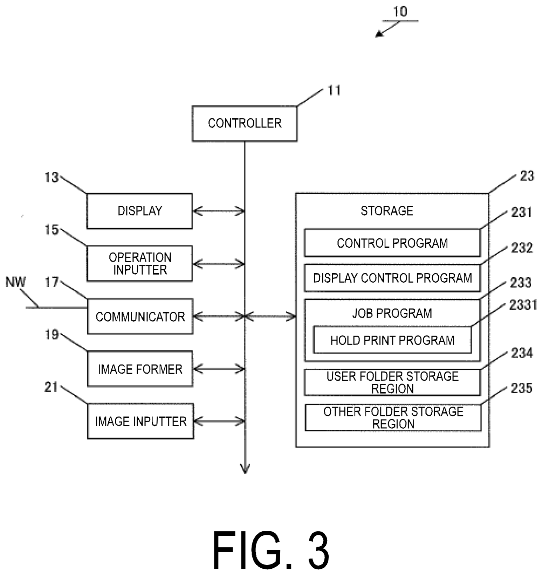

FIG. 2 is a perspective view of an external appearance for describing a general configuration of the multifunction apparatus 10 according to the first embodiment. FIG. 3 is a diagram illustrating a functional configuration of the multifunction apparatus 10.

The multifunction apparatus 10 includes a controller 11, a display 13, an operation inputter 15, a communicator 17, an image former 19, an image inputter 21, and a storage 23.

The controller 11 generally controls the multifunction apparatus 10. The controller 11 is composed of one or a plurality of computation apparatuses (such as a central processor (CPU) and a digital signal processor (DSP)). The controller 11 implements various functions of the multifunction apparatus 10 by reading and executing various programs stored in the storage 23. Note that the controller 11 may be configured as a system on a chip (SoC) having a plurality of functions among the functions described below. In addition, the controller 11 may be composed of one or a plurality of control circuits.

The display 13 displays a variety of information to the user and the like. The display 13 may be composed of a liquid crystal display (LCD), an organic electro-luminescence (EL) display, a micro LED display, or a mini-LED display, for example.

The operation inputter 15 receives an operation input and an information input from the user and the like. The operation inputter 15 may be composed of operation keys such as hard keys and software keys, or various input apparatuses such as buttons, for example. In addition, the operation inputter 15 may be configured as a touch panel display that enables input through the display 13. In this case, as an input method for the touch panel display, a resistive film method, an infrared method, an electromagnetic induction method, a capacitive method, or the like may be employed, for example.

The communicator 17 includes a wired/wireless network communication interface for communicating with other apparatuses such as the PC 50 through the network NW such as a local area network (LAN), a wide area network (WAN), the Internet, a telephone line, and a fax line. The wireless network communication interface may include, for example, a short-range wireless communication interface such as Bluetooth (trade name), Wi-Fi (trade name), and IrDA.

The image former 19 forms an image based on print data onto a medium such as a sheet. The image former 19 feeds a sheet from a sheet feeder 25, forms an image based on print data onto the sheet, and then ejects it to a sheet ejector 27. The image former 19 may be composed of a laser printer employing an electrophotographic method or the like, for example. In this case, the image former 19 forms images using toner supplied from toner cartridges (not illustrated) corresponding to respective toner colors (for example, cyan, magenta, yellow, and black).

The image inputter 21 generates scan data by scanning and reading a document image to be read. The image inputter 21 may be configured as a scanner apparatus including an image sensor such as a charge coupled device (CCD) and a contact image sensor (CIS). The configuration of the image inputter 21 is not limited as long as it has a configuration of generating scan data composed of RGB (R: red, G: green, and B: blue) analog signals by reading a reflected light image from the document image using the image sensor. Note that it is also possible to configure the image inputter 21 as an interface capable of acquiring image data stored in a storage apparatus such as a USB memory in file formats such as TIFF, BMP, JPEG, or image data transmitted from another apparatus such as the PC 50.

The storage 23 is one or a plurality of storage apparatuses that store various programs required for the operation of the multifunction apparatus 10, and various data. The storage 23 may be composed of a storage apparatus such as a random access memory (RAM), a solid state drive (SSD), a hard disk drive (HDD), and a read only memory (ROM), for example.

In the first embodiment, the storage 23 stores a control program 231, a display control program 232, and a job program 233, and provides a user folder storage region 234 and another folder storage region 235.

The control program 231 is a program that is read by the controller 11 when the multifunction apparatus 10 is generally controlled. The controller 11, having read the control program 231, controls the operation of hardware such as the display 13, the operation inputter 15, the communicator 17, the image former 19, and the image inputter 21.

The display control program 232 is a program that is read by the controller 11 during the output control of the screen displayed on the display 13 or the operation inputter 15 configured as a touch panel display. The controller 11, having read the display control program 232, controls the display of the operation screen (such as the My Hold Print screen described later and a home screen not illustrated in the drawing) displayed on the display 13 (the operation inputter 15).

The job program 233 is a program that is read by the controller 11 when executing various jobs such as a print job, a copy job, a scan job, a fax job, and an e-mail transmission job, for example. The controller 11, having read the job program 233, switches the apparatus mode of the multifunction apparatus 10 to the job mode for executing each job, and executes the job for which an execution instruction has been received.

The job program 233 according to the first embodiment includes a hold print program 2331. When determining that received print data is associated with at least one of the user identification information serving as the first identification information and the apparatus identification information serving as the second identification information, the controller 11, having read the hold print program 2331, acquires the identification information.

Here, the user identification information is identification information including a user name of the user who owns the print data, and similar identification information (such as an email address, account information for a specific site, login information such as a login ID, login name, login password for logging into the multifunction apparatus 10, a card number of an IC card, and a combination thereof). On the other hand, the apparatus identification information is identification information for identifying the terminal device such as the PC 50 that issues a print request for the print data, including a computer name, an IP address, a media access control (MAC) address, a model number, a serial number, an identification number generated by a specific algorithm, or a combination thereof, for example.

In the present disclosure, there are two possible modes for acquiring the user identification information and/or the apparatus identification information:
(1) automatically acquiring the user identification information and/or the apparatus identification information from the PC 50 that has issued a print request (which may be referred to as automatic acquisition); and (2) acquiring the user identification information and/or the apparatus identification information as a print job based on an input value received through a print setting screen provided by a driver program of a printer driver or the like (which may be referred to as acquisition through the print setting screen).

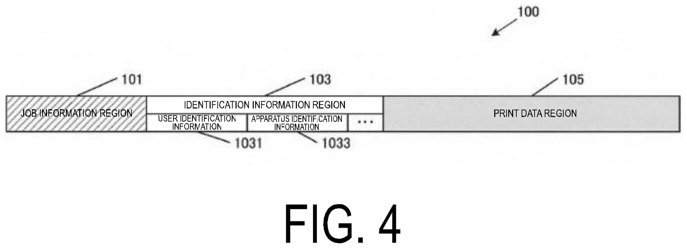

Now regarding the mode (2), an example of a print job generated based on an input value received through the print setting screen is described with reference to FIG. 4.

FIG. 4 schematically illustrates an example of a data configuration of a print job 100 acquired from the PC 50. FIG. 4 illustrates an example in which the data configuration of the print job 100 is composed of a job information region 101, an identification information region 103, and a print data region 105, but the data configuration of the print job 100 is not limited to the example illustrated in FIG. 4.

The job information region 101 is a region that stores information required for the multifunction apparatus 10 to execute a job based on the print job 100. The job information region 101 can store, as print job information, a job ID for uniquely identifying the print job 100, identification information such as a job name, connection information to the multifunction apparatus 10, print setting information such as the number of copies, number of pages, paper size, page layout, color management, fonts, and finishing settings, date and time information related to the execution time (transmission date and time) and the like, for example.

The identification information region 103 is a region that stores identification information such as user identification information 1031 and apparatus identification information 1033. The user identification information 1031 includes a login user name for a terminal device such as the PC 50, a user name input through the print setting screen, and the like. In addition, the apparatus identification information 1033 includes a computer name that is input through the print setting screen as necessary and the like.

The print data region 105 is a region that stores a main portion of print data. The print data stored in the print data region 105 only needs to be described in a page description language (PDL) interpretable by the multifunction apparatus 10, and may be a proprietary PDL provided by the manufacturer of the multifunction apparatus 10, or, for example, a PDL such as PostScript.

While FIG. 4 illustrates an example in which the print job 100 is composed of the job information region 101, the identification information region 103, and the print data region 105, the identification information region 103 may be included in the job information region 101, or included in the header portion and the like of the print data stored in the print data region 105. Further, the data to be transmitted to the multifunction apparatus 10 is not limited to a print job, and may be document data in PDF format or the like or image data in JPEG format or the like, to which identification information corresponding to the user identification information 1031 or the apparatus identification information 1033 is added, for example. Note that in the following description, the user identification information and the apparatus identification information are referred to as the user identification information 1031 and the apparatus identification information 1033, regardless of whether the identification information is acquired through automatic acquisition or print setting screen.

The controller 11 stores, in the user folder, print data that satisfies the distribution rule based on at least one of the acquired user identification information 1031 and the apparatus identification information 1033.

The controller 11 distributes and stores, in a user folder serving as a first folder, the print data associated with the identification information that satisfies a predetermined distribution rule. Here, the distribution of print data according to the present disclosure is a mode in which whether the acquired identification information satisfies the predetermined distribution rule is determined, and a user folder assigned with a folder name as an identifier corresponding to the identification information that satisfies the distribution rule is determined to be the storage destination folder of the print data. Note that when there is no user folder assigned with the folder name corresponding to the identification information, the controller 11 may create a new user folder associated with the folder name as an identifier corresponding to the identification information.

In accordance with three types of distribution rules, namely the user identification information 1031 (first rule), the apparatus identification information 1033 (second rule), and a combination of the user identification information 1031 and the apparatus identification information 1033 (third rule), the controller 11 according to the present disclosure determines the distribution destination of the print data based on the identification information that satisfies the distribution rule. In this manner, by providing the plurality (types) of distribution rules for print data, the print data can be stored even in the case where the identification information that can be obtained differs depending on the operating system (OS) of the PC 50 issuing the print request, or the case where the user who owns the print data cannot be identified in environments in which a plurality of terminal devices are used under a shared account or a single terminal device is shared by a plurality of users, for example.

To the print data stored in the user folder, it is possible to apply hold functions such as a print mode in which the hold state is maintained without executing sorting and printing (hold-without-print mode), a print mode in which the hold state of the print data is maintained after printing the required number of copies (hold-after-print), or a print mode for printing a plurality of copies in which only one copy is printed for content check before printing the remaining copies (sample print), for example.

Referring to FIG. 3 again, the user folder storage region 234 is a storage region that stores the user folder as the storage destination of the print data of each user. The other folder storage region 235 is a storage region that stores the other folder as a second folder that serves as a storage destination (evacuation destination) for print data that cannot be distributed to a user folder in accordance with the distribution rules described later. Note that the user folder storage region 234 and the other folder storage region 235 may be provided in another storage apparatus (not illustrated in the drawing) other than the storage 23.

### 1.3 Functional Configuration of PC 50

The configuration of the PC 50 serving as a terminal device is not limited as long as it can output the print job 100 to the multifunction apparatus 10 through a driver program of a printer driver or the like, and commonly available information processing apparatuses such as PCs, smartphones, and tablets on the market can be used. Accordingly, a detailed description of the PC 50 will be omitted here.

### 1.4 Flow of Processing

### 1.4.1 Processing Related To Storage of Print Data

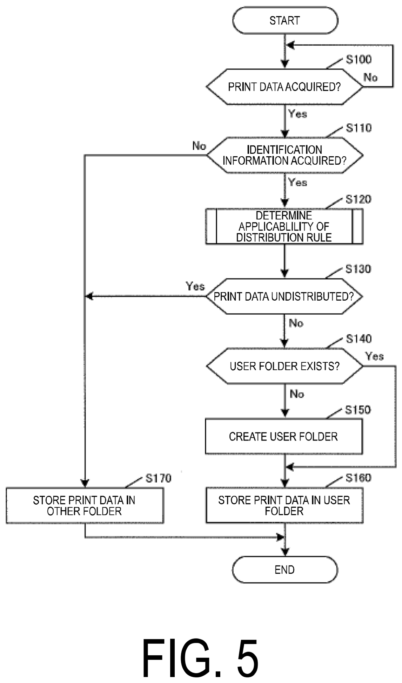

Next, a flow of processing according to the first embodiment is described. FIG. 5 is a flowchart for describing a flow of processing from acquisition of print data to storage into a user folder. Note that the processing illustrated in FIG. 5 is described as processing that is executed when the controller 11 reads the control program 231, the job program 233 (the hold print program 2331) and the like.

First, the controller 11 determines whether print data has been acquired from the PC 50 (step S100). When the controller 11 determines that print data has been acquired, it determines whether at least one of the user identification information 1031 and the apparatus identification information 1033 associated with the print data has been acquired (extracted) (step S100; Yes → step S110). Note that when the controller 11 determines that the print data has not been acquired, it waits until the print data is received (step S100; No).

When the controller 11 determines that the identification information associated with the print data has been acquired, it determines whether the distribution rule is applicable to the acquired identification information (step S110; Yes → step S120). Note that the processing of step S120 is described later.

Next, based on the determination result of step S120, the controller 11 determines whether the acquired print data is not distributable in accordance with the distribution rule and corresponds to undistributed data (step S130).

When the controller 11 determines that the acquired print data does not correspond to undistributed data, it determines whether there is the user folder provided with a folder name corresponding to the identification information acquired at step S110 in accordance with the distribution rule (step S130; No → step S140). When the controller 11 determines that there is a user folder provided with a folder name corresponding to the identification information, it stores the print data in the user folder, and terminates the processing (step S140; Yes → step S160).

On the other hand, when the controller 11 determines that the user folder provided with a folder name corresponding to the identification information acquired at step S110 is not present, it creates a user folder associated with an identifier (folder name) corresponding to the identification information (step S140; No → step S150). Then, the controller 11 stores the print data in the created user folder, and terminates the processing (step S160).

When the controller 11 determines that at least one of the user identification information 1031 and the apparatus identification information 1033 is not associated with the print data at step S110 (step S110; No), or that the acquired print data corresponds to undistributed data (step S130; Yes), it stores the print data in the other folder for evacuation, and terminates the processing (step S170).

### 1.4.2 Determination Processing As To Whether Distribution Rule Is Applicable

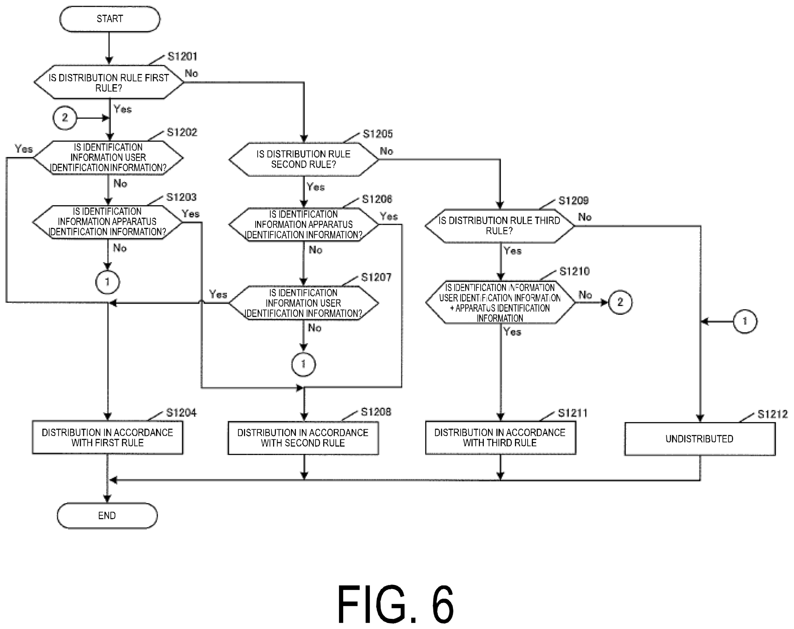

Next, the determination processing as to whether the distribution rule is applicable at step S120 in FIG. 5 is described with reference to the flowchart of FIG. 6.

When the processing is started, the controller 11 determines whether the predetermined distribution rule is the first rule (step S1201). When the controller 11 determines that the distribution rule is the first rule, it determines whether the identification information associated with the print data acquired at step S100 of FIG. 5 is the user identification information 1031 (step S1201; Yes → step S1202).

When the controller 11 determines that the identification information associated with the print data is the user identification information 1031, it determines that the print data can be distributed in accordance with the first rule, and terminates the processing (step S1202; Yes → step S1204). On the other hand, when the controller 11 determines that the identification information associated with the print data is not the user identification information 1031, it determines whether the identification information associated with the print data is the apparatus identification information 1033 (step S1202; No → step S1203). When the controller 11 determines that the identification information associated with the print data is the apparatus identification information 1033, it determines that the print data can be distributed in accordance with the second rule, and terminates the processing (step S1203; Yes → step S1208). Note that when the controller 11 determines that the identification information associated with the print data is not the apparatus identification information 1033, it advances the processing to step S1212 (step S1203; No → step S1212). At step S1202, when the controller 11 determines that the identification information associated with the print data is not the user identification information 1031, it may advance the processing to step S1212 (step S1202; No → step S1212).

At step S1201, when the controller 11 determines that the predetermined distribution rule is not the first rule, it determines whether the distribution rule is the second rule (step S1201; No → step S1205). When the controller 11 determines that the distribution rule is the second rule, it determines whether the identification information associated with the print data acquired at step S100 of FIG. 5 is the apparatus identification information 1033 (step S1205; Yes → step S1206).

When the controller 11 determines that the identification information associated with the print data is the apparatus identification information 1033, it determines that the print data can be distributed in accordance with the second rule, and terminates the processing (step S1206; Yes → step S1208). On the other hand, when the controller 11 determines that the identification information associated with the print data is not the apparatus identification information 1033, it determines whether the identification information associated with the print data is the user identification information 1031 (step S1206; No → step S1207). When the controller 11 determines that the identification information associated with the print data is the user identification information 1031, it is determined that the print data can be distributed in accordance with the first rule, and terminates the processing (step S1207; Yes → step S1204). At step S1206, when the controller 11 determines that the identification information associated with the print data is not the apparatus identification information 1033, it may advance the processing to step S1212 (step S1206; No → step S1212).

At step S1205, when the controller 11 determines that the predetermined distribution rule is not the second rule, it determines whether the distribution rule is the third rule (step S1205; No → step S1209). When the controller 11 determines that the distribution rule is the third rule, it determines whether the identification information associated with the print data acquired at step S100 of FIG. 5 is the user identification information 1031 and the apparatus identification information 1033 (step S1209; Yes → step S1210).

When the controller 11 determines that the identification information associated with the print data is the user identification information 1031 and the apparatus identification information 1033, it determines that the print data can be distributed in accordance with the third rule, and terminates the processing (step S1210; Yes → step S1211). On the other hand, when the controller 11 determines that the identification information associated with the print data is not the user identification information 1031 and the apparatus identification information 1033, it repeats the processing from step S1202 (step S1210; No → step S1202). When the controller 11 determines that the identification information associated with the print data is not the user identification information 1031 and the apparatus identification information 1033, it may advance the processing to step S1212 (step S1210; No → step S1212).

When the controller 11 determines that the predetermined distribution rule is not the third rule (step S1209; No), when it determines that the identification information is not the apparatus identification information 1033 (step S1203; No), or when it determines that the identification information is not the user identification information 1031 (step S1207; No), it determines that the print data cannot be distributed in accordance with the distribution rule and that the data is undistributed data, and terminates the processing (step S1209; No → step S1212). Note that the print data determined to be undistributed data is distributed to the other folder.

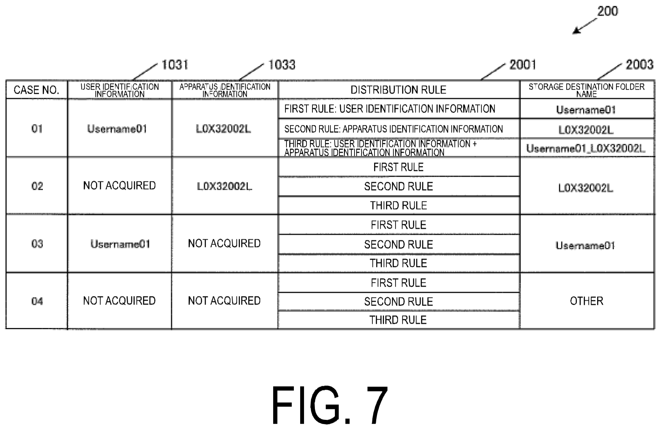

Now, an example of distribution of print data based on the flow of the processing described with reference to FIGS. 5 and 6 is described below with reference to a table 200 of FIG. 7.

The table 200 exemplified in FIG. 7 illustrates the case No., the user identification information 1031, the apparatus identification information 1033, a distribution rule 2001, and a storage destination folder name 2003.

The case No. represents an identification number for identifying the acquisition pattern of the identification information exemplified in FIG. 7. In FIG. 7, the case No. 01 represents a pattern of a case where both the user identification information 1031 and the apparatus identification information 1033 are acquired from the PC 50 at step S100 of FIG. 5. The case No. 02 represents a pattern of a case where the user identification information 1031 is not acquired but the apparatus identification information 1033 is acquired at step S100 of FIG. 5. The case No. 03 represents a pattern of a case where the user identification information 1031 is acquired but the apparatus identification information 1033 is not acquired at step S100 of FIG. 5. The case No. 04 represents a pattern of a case where both the user identification information 1031 and the apparatus identification information 1033 are not acquired at step S100 of FIG. 5.

The user identification information 1031 and the apparatus identification information 1033 represent examples of the user identification information and the apparatus identification information acquired (or not acquired) at step S100 of FIG. 5. Note that in FIG. 7, "Username01" represents a user name acquired as the user identification information 1031, "L0X32002L" represents a computer name acquired as the apparatus identification information 1033, and "not acquired" represents a case where the identification information is not acquired.

The distribution rule 2001 represents the distribution rules (first rule, second rule, and third rule) used for the applicability determination in the step S120 in FIG. 5 and the processing of FIG. 6. In FIG. 7, the rule content (identification information) of each distribution rule is shown for the case No. 01, but only the rule numbers (first rule, second rule, and third rule) are shown for the case No. 02 and subsequent cases.

The storage destination folder name 2003 represents the folder name of the user folder serving as the storage destination of the print data distributed in accordance with the distribution rule. Note that FIG. 7 assumes for explanation that there is a user folder provided with a folder name corresponding to the identification information.

For example, in the case represented by the case No. 01, in which both the user name "Username01" as the user identification information 1031 and the computer name "L0X32002L" as the apparatus identification information 1033 have been acquired and the predetermined distribution rule is the first rule, the folder name of the user folder serving as the storage destination of the print data is "Username01". In addition, in the case where the predetermined distribution rule is the second rule, the folder name of the user folder serving as the storage destination folder of the print data is "L0X32002L". Further, in addition, in the case where the predetermined distribution rule is the third rule, the folder name of the user folder serving as the storage destination folder of the print data is "USername01_L0X32002L" composed of "user 1" and "PC 1" connected with an underscore.

Next, in the case represented by the case No. 02, in which the user identification information 1031 is not acquired but the apparatus identification information 1033 is acquired, the folder name of the user folder serving as the storage destination folder of the print data is "L0X32002L" in all of the distribution rules from the first rule to the third rule. Note that in the case where the predetermined distribution rule is the second rule or the third rule, the folder name of the user folder serving as the storage destination folder of the print data may be "L0X32002L", whereas in the case where the predetermined distribution rule is the first rule, the storage destination of the print data may be set to "the other folder" as the print data cannot be distributed in accordance with the distribution rule.

Next, in the case represented by the case No. 03, in which the user identification information 1031 is acquired but the apparatus identification information 1033 is not acquired, the folder name of the user folder serving as the storage destination folder of the print data is "Username01" in all of the distribution rules from the first rule to the third rule. Note that in the case where the predetermined distribution rule is the first rule or the third rule, the folder name of the user folder serving as the storage destination folder of the print data may be "Username01", whereas in the case where the predetermined distribution rule is the second rule, the storage destination of the print data may be set to "the other folder" as the print data cannot be distributed in accordance with the distribution rule.

On the other hand, in the case represented by the case No. 04, in which both the user name "Username01" as the user identification information 1031 and the computer name "L0X32002L" as the apparatus identification information 1033 are not acquired, the storage destination of the print data is "the other folder" as the print data cannot be distributed in accordance with the distribution rule in all of the distribution rules from the first rule to the third rule.

### 1.4.3 Processing of Acquiring Identification Information

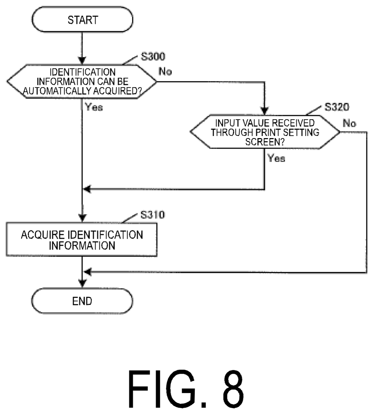

Next, the processing of acquiring identification information at step S110 in FIG. 5 is described with reference to a flowchart of FIG. 8.

When the processing is started, the controller 11 determines whether identification information such as the user identification information 1031 and the apparatus identification information 1033 associated with the print data acquired from the PC 50 can be automatically acquired (step S300). In this case, the controller 11 can determine whether the identification information can be automatically acquired by transmitting an acquisition request of the identification information to the PC 50 that has issued a print request as a response to the acquisition (reception) of print data, and checking the presence/absence and content of the response from the PC 50. In addition, whether the identification information associated with the currently acquired print data can be automatically acquired may be determined by providing a mechanism for managing the transmission source information (such as an IP address) of previously acquired print data, and comparing the currently acquired transmission source information and the previously acquired transmission source information. Note that the processing described in FIG. 8 is merely an example, and the controller 11 may determine whether identification information is included in the print data acquired from the PC 50 without performing the acquisition request of the identification information to the PC 50. Specifically, it is determined that the identification information has been acquired when the identification information is included in the print data acquired from the PC 50, whereas it is determined that the identification information has not been acquired when the identification information is not included in the print data acquired from the PC 50.

When the controller 11 determines that the identification information can be automatically acquired from the print job 100, it acquires the identification information and terminates the processing (step S300; Yes → step S310).

On the other hand, when the controller 11 determines that the identification information cannot be automatically acquired, it determines whether the input (input value) of the identification information such as the user identification information 1031 and/or the apparatus identification information 1033 has been received through the print setting screen (step S300; No → step S320). When it is determined that an input of the identification information corresponding to the identification information has been received through the print setting screen, the identification information is acquired (step S320; Yes → step S310). On the other hand, when it is determined that an input of the identification information corresponding to the identification information has not been received through the print setting screen, the processing is terminated as the acquisition of the identification information is not possible (step S320; No). In this case, the controller 11 only needs to check whether the identification information region 103 of the print job 100 exemplified in FIG. 4 includes at least one of the user identification information 1031 and the apparatus identification information 1033, and determine whether the identification information can be acquired (extracted).

The processing of step S300 and the processing of step S320 may be executed in reverse order. Specifically, it is also possible to adopt a configuration in which, when acquisition of the identification information through the print setting screen is not possible, automatic acquisition of the identification information from the PC 50 is attempted.

### 1.4.4 My Hold Print Screen Display Process

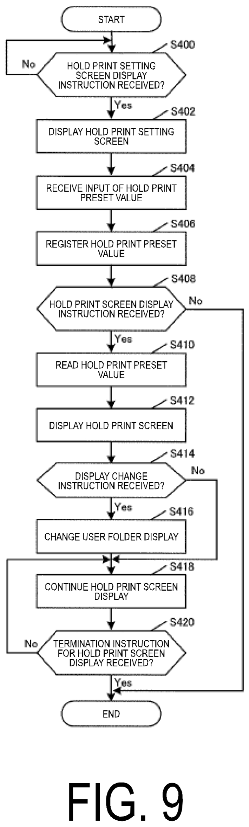

Next, with reference to a flowchart of FIG. 9, processing of displaying a My Hold Print screen that lists the user folder is described.

The controller 11 determines whether a display instruction for a setting screen related to the My Hold Print function (My Hold Print setting screen) has been received through a basic screen such as a home screen, or a system setting screen (not illustrated in the drawing) called up through the Web (step S400), for example.

When the controller 11 determines that a display instruction for the My Hold Print setting screen has been received, it displays the My Hold Print setting screen (step S400; Yes → step S402). Note that when the controller 11 determines that the display instruction for the My Hold Print setting screen has not been received, it waits until the display instruction is received (step S400; No).

The controller 11 receives the input of a preset value of the My Hold Print through the displayed My Hold Print setting screen, and registers the received preset value (step S404 → step S406).

The controller 11 determines whether the display instruction for the My Hold Print screen has been received from the user (step S408). When the controller 11 determines that the display instruction for the My Hold Print screen has been received, it reads the preset value of the My Hold Print registered at step S406, and performs a display control based on the read preset value to display the My Hold Print screen (step S408; Yes → step S410 → step S412).

On the other hand, when the controller 11 determines that the display instruction for the My Hold Print screen has not been received, it terminates the processing related to the display of the My Hold Print screen (step S408: No). Note that when the controller 11 determines that the display instruction for the My Hold Print screen has not been received, it may wait until the display instruction is received (step S408; No).

Then, the controller 11 determines whether a display change instruction for the user folder, such as sorting based on a predetermined sorting rule and a folder name change, has been received (step S414). When the controller 11 determines that the display change instruction for the user folder has been received, it changes the display of the user folder, and then continues the display of the My Hold Print screen (step S414; Yes → step S416 → step S418). On the other hand, when the controller 11 determines that the display change instruction for the user folder has not been received, it continues the display of the My Hold Print screen (step S414; No → step S418).

Then, the controller 11 determines whether a termination instruction for the display of the My Hold Print screen has been received (step S420). When the controller 11 determines that the termination instruction for the display of the My Hold Print screen has been received, it terminates the display of the My Hold Print screen (step S420; Yes). On the other hand, when the controller 11 determines that the termination instruction for the display of the My Hold Print screen has not been received, it continues the display of the My Hold Print screen (step S420; No → step S418).

### 1.5 Operation Example

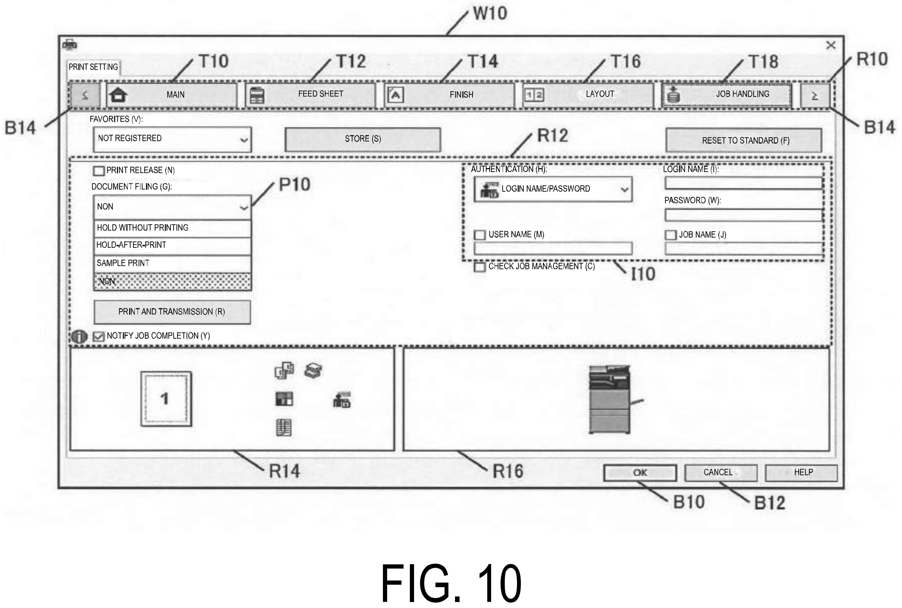

Next, an operation example according to the first embodiment is described. FIG. 10 is a diagram for describing an example of a display configuration of a print setting screen W10 provided by a driver program installed in the PC 50. The print setting screen W10 can be displayed based on a print execution instruction for creation of a document, a chart and the like received through application software. The print setting screen W10 is a screen for receiving a print setting for outputting to the multifunction apparatus 10 an object created using application software as the print job 100.

The print setting screen W10 includes a tab display region R10, a setting item display region R12, a print image display region R14, a main body image display region R16, an OK button B10, and a cancel button B12.

The tab display region R10 is a region for displaying the tab for receiving a display switching instruction for print setting items displayed in the setting item display region R12. Each tab displayed in the tab display region R10 is formed in a substantially rectangular shape, and in the rectangular display region, both a name indicating the print setting item and an icon suggestive of the print setting item are displayed. This configuration facilitates the user's understanding of the print setting contents that can be set by selecting each tab. FIG. 10 illustrates an example in which a main tab T10, a sheet feed tab T12, a finish tab T14, a layout tab T16, and a job handling tab T18 are displayed in the tab display region R10, as an example configuration of tabs displayed in the tab display region R10.

The main tab T10 is a tab for receiving a display instruction for print setting items related to functions frequently used by the user. The sheet feed tab T12 is a tab for receiving a display instruction for print setting items related to the size, type and sheet feed tray of the sheet to be used for printing. The finish tab T14 is a tab for receiving a display instruction for a print setting item of the settings of finishing functions such as stapling, punching and folding, and a discharge tray, for example. The layout tab T16 is a tab for receiving a display instruction for print setting items related to a layout such as duplex printing and bookbinding, for example. The job handling tab T18 is a tab for receiving a display instruction for print setting items related to user authentication and document filing, which is a function for holding (storing) and using print data. Note that FIG. 10 illustrates an example in which the main tab T10, the sheet feed tab T12, the finish tab T14, the layout tab T16, and the job handling tab T18 are displayed as tabs displayed in the tab display region R10. In addition to these tabs, it is also possible to include, for example, an insert tab that receives a display instruction for print setting items related to insertion functions such as cover sheets, interleaves, and index sheets; a stamp tab that receives a display instruction for print setting items related to watermark and stamp functions; an image quality tab that receives a display instruction for print setting items related to image quality; and a specific setting tab that receives a display instruction for specific print setting items related to printing and tandem printing in which print data is distributed across a plurality of multifunction apparatuses. These tabs can be displayed by receiving a selection instruction on arrow buttons B14 provided on the left and right sides in the tab display region R10.

In addition, FIG. 10 illustrates an example in which the job handling tab T18 is selected by the user in the tab display region R10. The job handling tab T18 selected by the user is distinguishable as being currently selected for print settings related to job handling, by means of emphasizing the rectangular border portion, coloring the selected tab or the like.

The setting item display region R12 is a display region for displaying the print setting item corresponding to the tab for which a display instruction has been received in the tab display region R10. In the setting item display region R12, different print setting items are displayed depending on the tabs for which the display instruction has been received. FIG. 10 illustrates an example in which print setting items related to the document filing and the user authentication are displayed in accordance with the selection of the job handling tab T18.

The setting item display region R12 exemplified in FIG. 10 includes a pull-down menu P10 for receiving a selection instruction for a mode related to document filing, a user authentication setting item I10, and a user identification information input item I12.

The pull-down menu P10 is a pull-down menu for receiving a selection instruction for any of the modes related to document filing ("hold-without-print mode", "hold-after-print mode", "sample print", or "non").

The user authentication setting item I10 is an item for receiving the setting of the authentication method in the case where user authentication is required for each execution of a print job. FIG. 10 illustrates an example in which the "login name/password" is selected as the authentication method, and both input boxes for receiving the input of the login name (I) and the password (W) are displayed. In addition, the user authentication setting item I10 may be provided with input boxes for receiving the input of the user name (M), the job name (J) and the like. In the present disclosure, a user name input as the user name (M) may be used as the user identification information. Note that the user authentication setting item I10 may be provided with an input box for receiving the input of apparatus identification information such as the computer name of the PC 50, in addition to the input boxes for the user name (M), the job name (J) and the like. The input value of the user name (M) or the like input at the user authentication setting item I10 is stored in the identification information region 103 exemplified in FIG. 4, and transmitted (output) as the print job 100 to the multifunction apparatus 10.

The print image display region R14 is a display region for displaying a print image based on the item set in the setting item display region R12. The main body image display region R16 is a display region for displaying a mounted state of an option mounted on the multifunction apparatus 10, and a main body image of a discharge tray or the like.

The OK button B10 is a button for receiving a confirmation instruction for the item set in the setting item display region R12. The cancel button B12 is a button for receiving a cancel instruction for the item set in the setting item display region R12.

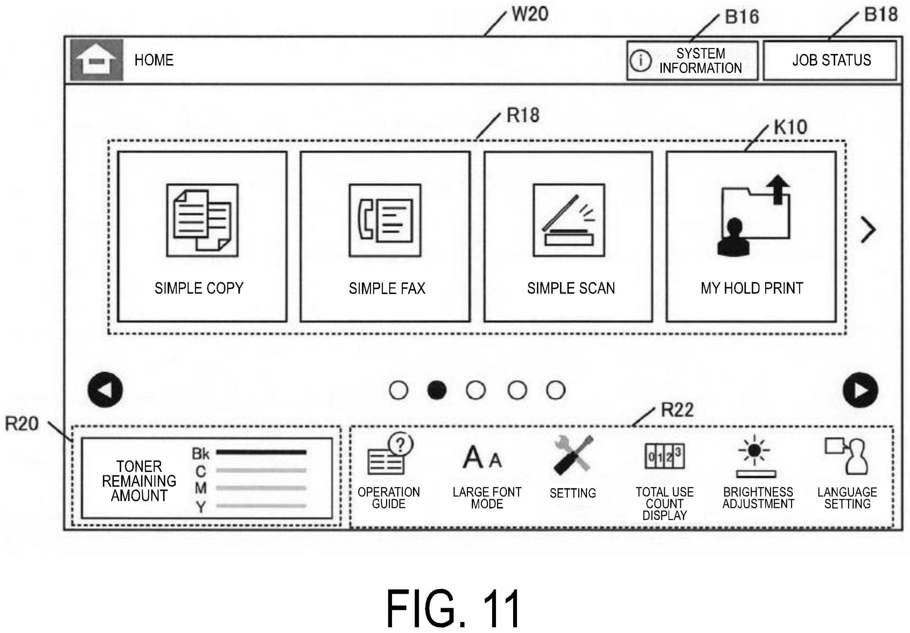

Next, an example of a display configuration of a home screen W20 of the multifunction apparatus 10 is described with reference to FIG. 11. The home screen W20 is a basic screen that is displayed on the display 13 when the power is turned on, during standby, or upon recovery from a sleep state, and receives user instructions and operation inputs, for example. The home screen W20 includes a system information button B16, a job status button B18, a mode selection region R18, an apparatus state display region R20, and a function selection region R22.

The system information button B16 is a button for receiving a display instruction for a system information screen not illustrated in the drawing. When receiving the selection instruction for the system information button B16, the controller 11 displays a system information screen for displaying information related to apparatus maintenance, such as paper-out notifications or firmware updates, and apparatus information related to communication settings and the like, for example.

The job status button B18 is a button for receiving a display instruction for a job status screen not illustrated in the drawing. When receiving a selection instruction for the job status button B18, the controller 11 displays a job status screen that indicates jobs being executed or on standby, using text or icons.

The mode selection region R18 is a display region for displaying a shortcut key for receiving a screen transition instruction to various setting screens related to modes and functions that can be implemented by the multifunction apparatus 10. FIG. 11 illustrates an example in which a shortcut key K10 "My Hold Print" is displayed in addition to shortcut keys for "simple copy", "simple fax", and "simple scan" in the mode selection region R18. The "My Hold Print" shortcut key K10 is a shortcut key for receiving a screen transition instruction to the My Hold Print screen described later.

The apparatus state display region R20 is a region for displaying the apparatus state of the multifunction apparatus 10. FIG. 11 illustrates an example in which a toner remaining amount is displayed in the apparatus state display region R20.

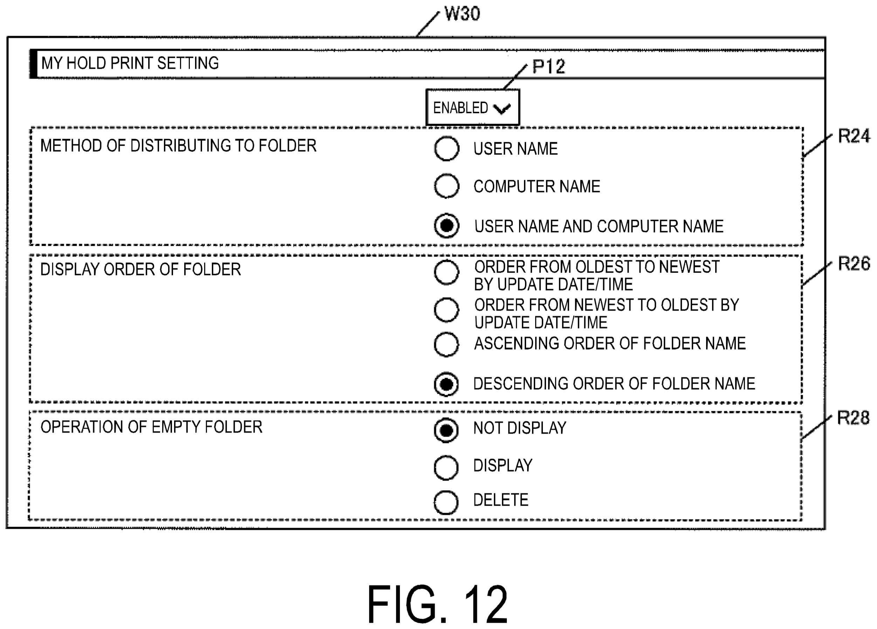

The function selection region R22 is a display region for displaying various buttons for receiving a change instruction, a reference instruction and the like for the function setting of the multifunction apparatus 10. For example, when a "large font mode" button is selected, a check mark is added at the right corner of the button, and the character size on the screen becomes larger. In addition, when a "total use count display" button is selected, a display screen showing the total number of sheets used and the toner remaining amount (%) is displayed. In addition, the "setting" button is a button for receiving a display instruction for a system setting screen not illustrated in the drawing, and the system setting screen includes a My Hold Print setting screen W30 exemplified in FIG. 12.

FIG. 12 is a diagram for describing an example of a display configuration of the My Hold Print setting screen W30 for receiving various settings related to the My Hold Print function. Note that the My Hold Print setting screen W30 may be displayed also through a print data display screen described later and the like.

The My Hold Print setting screen W30 includes a pull-down menu P12, a folder distribution method setting region R24, a folder display order setting region R26, and an empty folder operation setting region R28. Note that the My Hold Print setting screen W30 may be provided with a setting region for receiving a setting "whether to delete the data after printing", in addition to the above-mentioned setting regions.

The pull-down menu P12 is a pull-down menu for receiving a selection instruction for enabling/disabling the My Hold Print function. FIG. 12 illustrates an example in which the My Hold Print function is enabled. On the other hand, when the My Hold Print function is disabled, the "My Hold Print" shortcut key K10 in the mode selection region R18 of the home screen W20 is not displayed.

Here, for example, when the My Hold Print function is changed from enabled to disabled, the user folder as the storage destination of the print data and the print data stored in the user folder cannot be displayed but are not deleted, and when the My Hold Print function is enabled again, the user folder and the print data stored in the user folder are displayed again on the My Hold Print screen described later, the print data display screen or the like.

The folder distribution method setting region R24 is a setting region for receiving a selection of the distribution method to the user folder in accordance with the above-described distribution rule. FIG. 12 illustrates an example in which any of three types of distribution methods, namely the "user name" based on the first rule, the "computer name" based on the second rule, and the "user name and computer name" based on the third rule, can be selected, and the "user name and computer name" is selected as the distribution method. Note that the folder name can be determined based on the distribution method set in the folder distribution method setting region R24.

Note that even when the folder distribution method is changed, the user folder as the storage destination, and the print data stored in the user folder are not deleted. The user folder using a different distribution method is also listed on a My Hold Print screen W40 described later, and it is thus possible to select and print the print data acquired before the change of the distribution method.

The folder display order setting region R26 is a setting region for receiving a selection of the initial value of the display order (sorting rule) of the user folder on the My Hold Print screen W40 described later. FIG. 12 illustrates an example in which the display order of any of "order from oldest to newest by update date/time", "order from newest to oldest by update date/time", "ascending order of folder name", and "descending order of folder name" can be selected, and the "descending order of folder name" is selected as the initial value of the display order.

The empty folder operation setting region R28 is a setting region for receiving a setting related to handling of the user folder when there is no print data to be held (stored). FIG. 12 illustrates an example in which any one of handling "not display", "display", and "delete" can be selected, and "not display" is selected as the handling of the user folder. Here, "not display" is a mode in which the user folder itself is not deleted, but the display of the user folder is limited (hidden). By hiding the user folder where there is no print data, the display region related to the display of the user folder can be effectively utilized, and when print data whose storage destination is a hidden user folder is acquired, the print data can be promptly stored into that user folder.

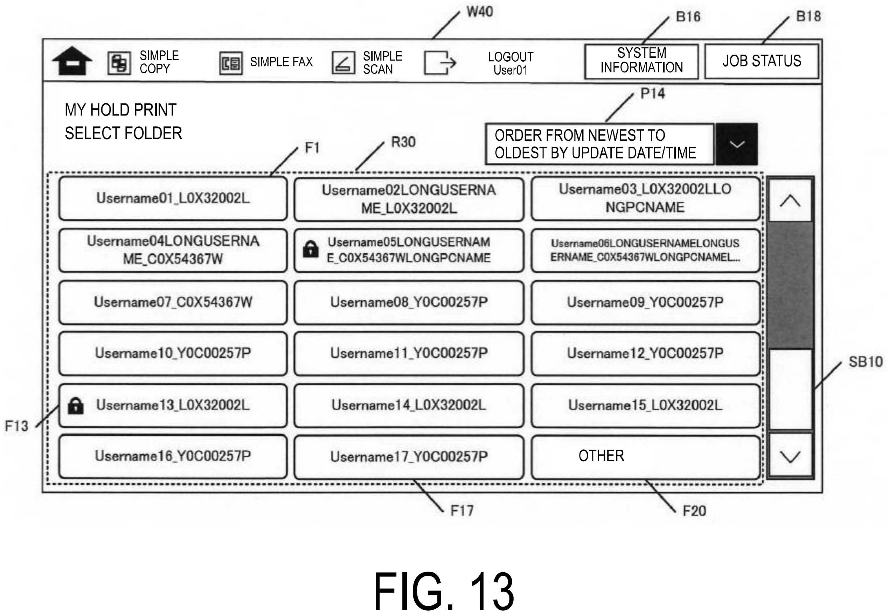

FIG. 13 is a diagram for describing an example of a display configuration of the My Hold Print screen W40 that lists the user folder.

The My Hold Print screen W40 includes a folder display region R30, a pull-down menu P14, the system information button B16, the job status button B18, and a scroll bar SB10.

The folder display region R30 is a display region for displaying user folders (F1, ..., F13, ..., F17) and another folder F20. Note that only some of the user folders (F1, ..., F13, ..., F17) exemplified in FIG. 13 are provided with reference signs for the sake of explanation in the drawings, and when the user folders (F1.., F13.., F17) are not discriminated, the folders are simply referred to as user folder Fn.

The user folders Fn exemplified in FIG. 13 are formed in substantially rectangular shapes, and in the rectangular display regions, folder names composed of the user identification information 1031 and the apparatus identification information 1033 connected with an underscore (_) are displayed as the folder names (identifiers) (corresponding to the case No. 01 and the third rule in FIG. 7). Note that in FIG. 13, the user folders Fn are displayed in accordance with the folder display order (for example, descending order of folder name) selected in the folder display order setting region R26 of FIG. 12.

Here, an example is illustrated in which the user folder F1 is provided with "Username01_L0X32002L" as the folder name, and the user folder F17 displayed at the end is provided with "Username17_Y0C00257P" as the folder name. Specifically, for example, the user folder F1 is the user folder Fn that stores print data owned by the user who is identified by the user name "Username01" as the user identification information 1031 and the computer name "L0X32002L" as the apparatus identification information 1033. Note that in addition to the folder name, the user folder Fn may be displayed with a lock mark or the like as illustrated in the user folder F13, indicating that user authentication information is required for editing or viewing the print data in the user folder.

The other folder F20 exemplified in FIG. 13 is a folder that stores print data that is determined to be undistributed to the user folder Fn as it cannot be distributed to the user folders Fn in accordance with the distribution rule. Note that the controller 11 displays the other folder F20 in the folder display region R30 regardless of the presence/absence of print data to be stored.

The pull-down menu P14 is a pull-down menu for receiving a selection instruction for the sorting rule (display order) of the user folders Fn within the folder display region R30. FIG. 13 illustrates a state where "order from newest to oldest by update date/time" is selected as a sorting rule. When receiving a selection instruction for the sorting rule from the user through the pull-down menu P14, the controller 11 executes sorting of the user folders Fn within the folder display region R30 based on the received sorting rule ("order from oldest to newest by update date/time", "order from newest to oldest by update date/time", "ascending order of folder name", and "descending order of folder name").

The system information button B16 and the job status button B18 may have the same configurations as the system information button B16 and the job status button B18 described with reference to FIG. 11, and therefore description thereof will be omitted here.

The scroll bar SB10 indicates the current display position of the folder display region R30, and changes the display position of the folder display region R30 along with the movement of a belt-shaped bar in the up-down direction. FIG. 13 illustrates a state where the scroll bar SB10 is located at the end position of the user folder Fn (the user folder F17) within the folder display region R30 and the display position of the other folder F20.

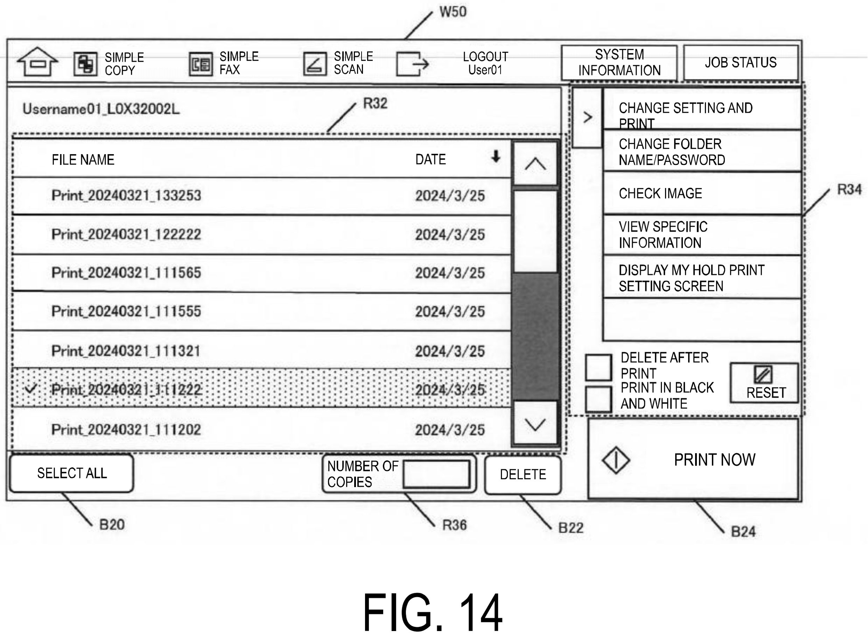

FIG. 14 is an example of a display configuration of a print data display screen W50 that is displayed by the controller 11 upon reception of a selection instruction for the user folder F1 exemplified in FIG. 13.

The print data display screen W50 includes a print data display region R32, an operation selection region R34, a "select all" button B20, a copy number input region 36, a "delete" button B22, and a "print now" button B24.

The print data display region R32 is a display region for listing the print data stored in the user folder F1. FIG. 14 illustrates an example in which as the print data stored in the user folder F1, seven pieces of print data, from "Print_20240321_133253" to "Print_20240321_111202", are displayed in the order (descending order) in which they were stored in the user folder F1. The print data display region R32 is configured such that the print data to be executed as a print job can be selected, and FIG. 14 illustrates a state where the print data "Print_20240321_111222" is selected by the user. As illustrated in FIG. 14, the selected print data can be represented by a check mark indicating that it has been selected, or by a display color different from that of the non-selected print data.

The operation selection region R34 is a region for receiving a selection of an operation instruction for each print data displayed in the print data display region R32, and an operation instruction related to the My Hold Print function. FIG. 14 illustrates an example in which it is possible to input, as operation instructions, selection instructions such as "change setting and print", "change folder name/password", "check image", "view specific information", and "display My Hold Print setting screen". In addition, in the operation selection region R34, a "delete after print" check box for receiving an instruction for deleting the print data after execution of a print job corresponding to the print data, a "print in black and white" check box for receiving an instruction for printing in black and white, a reset button for receiving a cancel instruction for a selection instruction on the print data display screen W50 and the like may also be displayed.

The "select all" button B20 is a selection button for receiving a selection instruction for all print data stored in the user folder F1. A copy number input region R36 is an input region for receiving an input of the number of copies to be printed for the selected print data. Here, when receiving a selection instruction (for example, touch operation) from the user, the copy number input region R36 can display numeric keys and receive an input of numerical values. In addition, when no print data is selected, the copy number input region R36 is greyed out, emits a warning sound upon receiving a selection instruction from the user, and does not receive any user operation. On the other hand, once print data is selected, the grey-out state is canceled, and an active state is set, thereby allowing reception of user operations. Further, in the copy number input region R36, the value of [number of copies] is displayed as blank until the number of copies is changed using the numeric keys. The changed value of [number of copies] is maintained even when the selected print data is changed; however, if no print data is selected, the display returns to the grey-out display again. The "delete" button B22 is a selection button for receiving an input of a delete instruction for the selected print data.

The "print now" button B24 is a selection button for receiving a print execution instruction for selected print data. When the number of copies to be printed is input as necessary in the copy number input region R36 for the print data selected by the user, and a selection instruction of the "print now" button B24 is received, the controller 11 executes printing based on the print data. Note that in the case where the job information region 101 is associated with the preset value corresponding to the number of copies to be printed as in the example illustrated in FIG. 4, printing is executed based on the number of copies to be printed associated in the job information region 101 when a selection instruction of the "print now" button B24 is received without an input of the number of copies to be printed in the copy number input region R36. When the number of copies to be printed is changed in the copy number input region R36, printing is executed based on the changed number of copies to be printed.

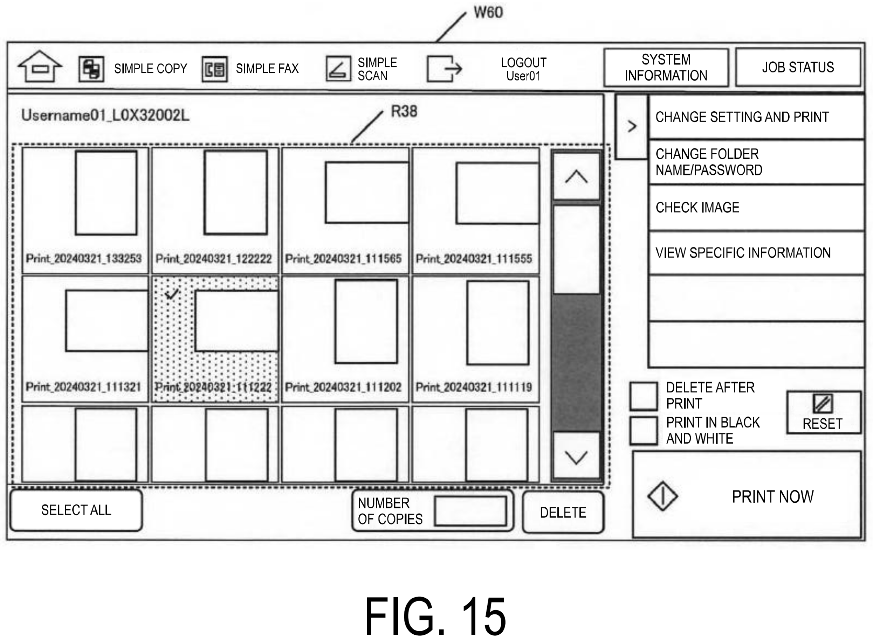

The print data stored in the user folder F1 may be displayed in a thumbnail format as well as the list format exemplified in FIG. 14. FIG. 15 illustrates an example in which a print data display screen W60 that displays print data stored in the user folder F1 in a thumbnail format in a print data display region R38. Note that the print data display screen W60 has the same configuration as the print data display screen W50 except for the configuration of the print data display region R38, and therefore description thereof will be omitted here.

When the print data in the user folder F1 is displayed in a thumbnail format, the user can visually recognize the content of the printing before the printing of the print data.

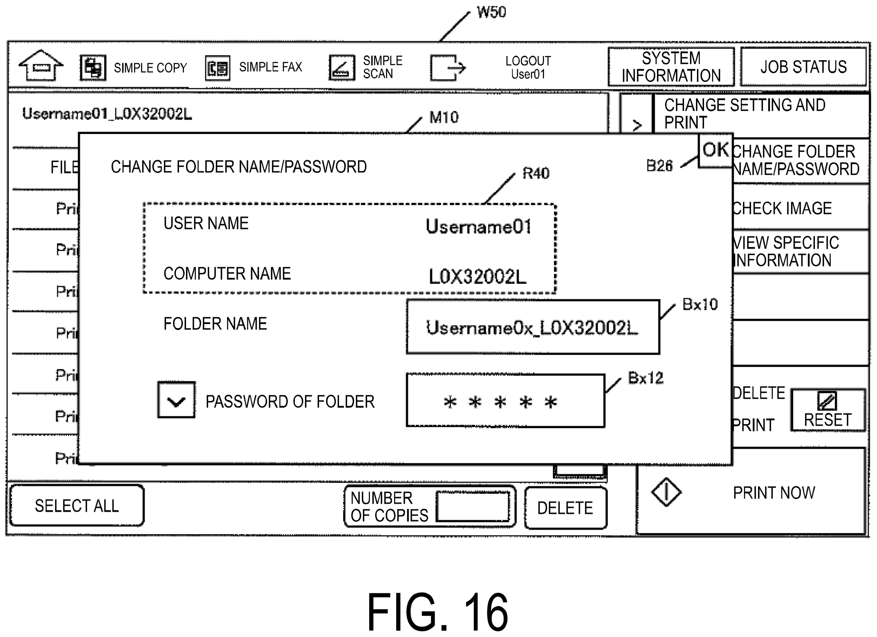

The name and password of the user folder Fn can be changed. FIG. 16 is an example of a display configuration of a change screen M10 displayed by the controller 11 when the operation instruction "change folder name/password" is received in the operation selection region R34 of FIG. 14.

The change screen M10 includes an identification information display region R40, a folder name input box Bx10, a password input box Bx12, and an OK button B26.

The identification information display region R40 is a display region for displaying the user name as the user identification information 1031 and the computer name as the apparatus identification information 1033 corresponding to the user folder Fn to be changed, and FIG. 16 illustrates an example in which the user name "Username01" and the computer name "L0X32002L" of the user folder F1 are displayed.

The folder name input box Bx10 is an input box for receiving an input of the folder name after change, and allows designation of an arbitrary character string. Note that while FIG. 16 illustrates an example in which "Usemame0x_L0X32002L" has been input as the folder name after change, the current folder name is displayed until an input of the folder name after change is received.

The password input box Bx12 is an input box for receiving an input of a password in the case where the password is set for the user folder Fn (F1) after change. Note that the password input box Bx12 may be configured to allow an input when a check box, which receives a selection instruction to set a password for the user folder Fn (F1), is checked, as exemplified in FIG. 16.

The OK button B26 is a button for receiving a confirmation instruction for the input content on the change screen M10. When receiving a selection instruction of the OK button B26, the controller 11 confirms the input content on the change screen M10, and changes the folder name/password based on the input content.

Note that even when the folder name of the user folder Fn is changed, the folder name is associated with the user identification information 1031 (user name) and the apparatus identification information 1033 (computer name), and thus the print data corresponding to the same user identification information 1031 and apparatus identification information 1033 can be stored in the user folder Fn after the folder name change. Thus, the folder name of the user folder Fn can be changed to an arbitrary name.

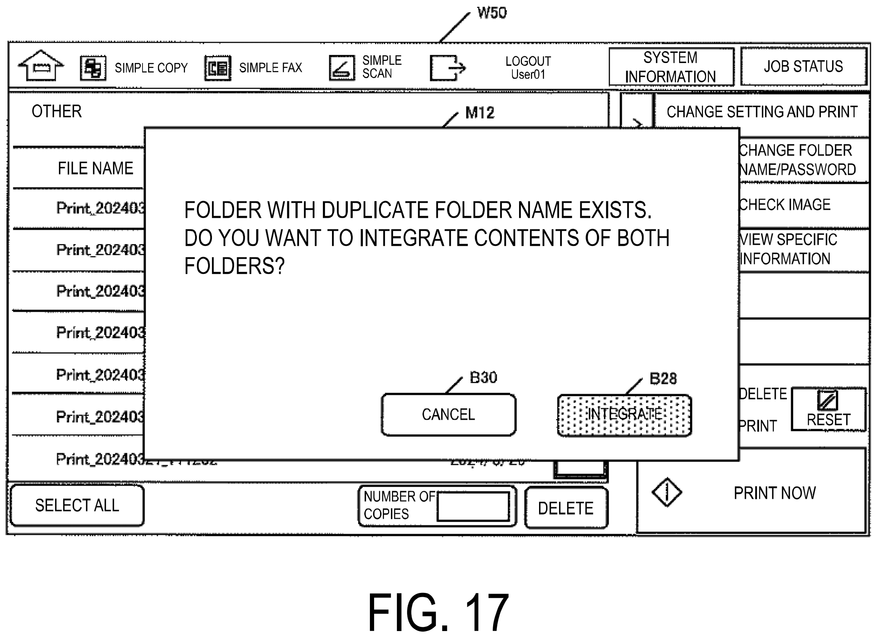

In addition, when the folder name of the user folder Fn is changed, there may be an existing folder (third folder) having the duplicate folder name. In this case, an inquiry screen M12 exemplified in FIG. 17 may be displayed to inquire whether to integrate the contents of the user folders Fn having the duplicate folder name, for example. The inquiry screen M12 may include a message content that inquires the user whether to integrate the user folders Fn "Folder with duplicate folder name exists. Do you want to integrate contents of both folders?", an integration button B28, and a cancel button B30, for example. The integration button B28 is a button for receiving a selection instruction for integration of the contents of the user folders Fn having the duplicate folder name. The cancel button B30 is a button for receiving a cancel instruction for integration of the contents of the user folders Fn having the duplicate folder name. When receiving a selection instruction of the integration button B28, the controller 11 integrates the contents of the user folders Fn having the duplicate folder name.

Even after the integration of the user folder Fn, the print data corresponding to the user identification information 1031 and the apparatus identification information 1033 associated with each user folder Fn before the integration is stored in the user folder Fn after the integration. As means for implementing this operation, the following two types of control are conceivable.
(1) The user folder Fn is configured such that a plurality of user identification information 1031 (user name) and apparatus identification information (computer name) can be associated with it, and the print data corresponding to any of the user identification information 1031 (user names) and the apparatus identification information (computer names) is stored in the user folder Fn after the integration.
(2) The actual user folders Fn are not integrated; instead, the same folder ID is assigned to the source user folders Fn. In the display on the My Hold Print screen W40 or the print data display screen W50, the plurality of user folders Fn assigned with the same folder ID are represented as if they were a single user folder.

Note that when the user folders Fn are integrated, duplicate file names of print data may possibly be included in the user folders Fn, but in that case, an identification serial number may be added to the end of the file name.

On the other hand, when the contents of the user folders Fn are not integrated, a plurality of user folders Fn having the same name will exist, but the user can identify the user folder Fn to be referenced by means of a sorting means such as the pull-down menu P14.

As described above, according to the first embodiment, by providing the plurality (types) of distribution rules for print data, the print data can be stored in accordance with the distribution rule even in the case where the identification information that can be obtained differs depending on the OS of the terminal device issuing the print request, or the case where the user who owns the print data cannot be identified in environments in which a plurality of terminal devices are used under a shared account or a single terminal device is shared by a plurality of users, for example. At this time, in the first embodiment, when one of the user identification information and the apparatus identification information cannot be acquired, the print data can be distributed in accordance with the distribution rule based on the identification information that has been acquired, and thus the user can transmit the print data to the multifunction apparatus without being aware of the identification information that can be acquired by the multifunction apparatus.

### 2. Second Embodiment

In a second embodiment, when a new user folder is to be created after the number of creatable user folders has reached the upper limit, the oldest user folder in terms of the update date/time is deleted to allow creation of a new user folder.

### 2.1 Functional Configuration

The functional configuration of a multifunction apparatus according to the second embodiment may be substantially the same as that of the multifunction apparatus 10 according to the first embodiment, and therefore description thereof will be omitted here.

### 2.2 Flow of Processing

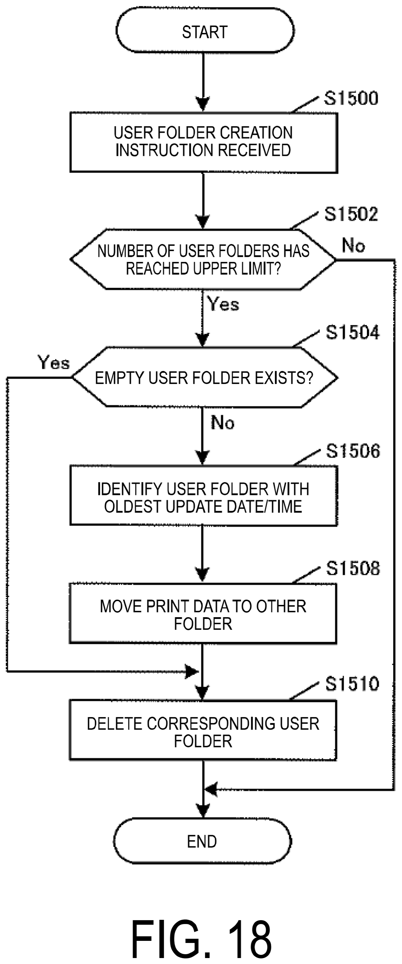

A flow of processing according to the second embodiment is described below. FIG. 18 is a flowchart for describing a flow of processing from reception of a creation instruction for a user folder to deletion of the user folder corresponding to a predetermined deletion condition. Note that the processing described with reference to FIG. 18 may be created as a subroutine of the processing of step S150 in FIG. 5.

When receiving a creation instruction for a user folder at step S150 of FIG. 5, the controller 11 counts the number of created user folders, and determines whether the number of created user folders has reached the upper limit storable in the user folder storage region 234 (step S1500 → step S1502).

When the controller 11 determines that the number of created user folders has reached the upper limit, it determines whether there is an empty user folder where no print data exists as a predetermined condition (step S1502; Yes → step S1504). On the other hand, when the controller 11 determines that the number of created user folders has not reached the upper limit, it terminates the processing because a new user folder can be created (step S1502; No).

When the controller 11 determines that there is an empty user folder where no print data exists, it deletes the corresponding user folder (step S1504; Yes → step S1510). Then, the controller 11 deletes the empty user folder where no print data exists, and terminates the processing (step S1510).

At step S1504, when the controller 11 determines that there is no empty user folder where no print data exists, it specifies the user folder whose update date/time is oldest as a predetermined condition (step S1504; No → step S1506). Here, "specifies the user folder whose update date/time is oldest" is merely an example for specifying the user folder to be deleted, and the setting may be changed as necessary such that the deletion target is a user folder for which a predetermined time (certain period) has elapsed from the update date/time, or a user folder in which the number or size of stored print data has exceeded a predetermined number (predetermined size), for example.

The controller 11 moves the print data stored in the specified user folder having the oldest update date/time to the other folder (step S1508). Then, the controller 11 deletes the specified user folder having the oldest update date/time, and terminates the processing (step S1510).

As described above, according to the second embodiment, even in the case where a new user folder is created after the number of creatable user folders has reached the upper limit, the new user folder can be created by deleting a user folder that meets a predetermined condition, while achieving the effects of the first embodiment. At this time, the print data stored in the user folder to be deleted can be evacuated to the other folder, and thus printing of the evacuated print data can be achieved through the other folder even when the user folder to be deleted is deleted.

The present disclosure is not limited to the embodiments described above, and various modifications may be made. That is, embodiments obtained by combining technical means that are appropriately modified within the scope not departing from the gist of the present disclosure are also included in the technical scope of the present disclosure. Among the matters disclosed herein, configurations for which a patent is sought are described in the appended claims, but this does not indicate any intention to exclude those not described in the claims from the technical scope.

In addition, in the above description, the expressions such as "in the case where ..." and "when ..." are provided as examples, and are not intended to limit the configuration to the described content. Configurations other than the "case" or "when" are also disclosed to the extent that they are obvious to those skilled in the art, and are intended to be included within the scope of rights to be obtained.

In addition, the descriptions of processes and data flows in the specification that involve a certain order are not limited to the described order. For example, configurations in which part of the processes are omitted or the order is rearranged are also disclosed, and are intended to be included within the scope of rights to be obtained.

In addition, although the above-described embodiments have been described separately in some parts for convenience of explanation, it goes without saying that they may be executed in combination to the extent technically possible.

In the embodiments, the program executed by each apparatus is a program (a program that causes a computer to function) that controls a CPU or the like so as to implement the functions of the above-described embodiments. Information handled by these apparatuses is temporarily stored in a temporary storage apparatus (for example, RAM) at the time of processing, and is then stored in a storage apparatus such as various read only memories (ROMs) or HDDs, and is read, modified, or written by the CPU as needed.

Here, examples of computer-readable, non-transitory recording media on which a program in the information processing apparatus is recorded include semiconductor media (such as a ROM and non-volatile memory cards), optical recording media or magneto-optical recording media (such as digital versatile disc (DVD), magneto optical disc (MO), mini disc (MD), compact disc (CD), and Blu-ray (trade name) disc (BD)), and magnetic recording media (such as a magnetic tape and a flexible disk). In this case, the program recorded on the recording medium is read by the computer of the information processing apparatus and executed by the computer, whereby the functions of the above-described embodiments are implemented. Moreover, the functions of the present disclosure are implemented by executing processing in cooperation with an operating system or other application programs based on instructions of the program.

In addition, when distributing to the market, the program may be stored in a portable recording medium for distribution, or may be transferred to a server computer connected through a network such as the Internet. In this case, it goes without saying that the storage apparatus of the server computer is also included in the present disclosure.

In addition, each functional block or various features of the apparatus used in the above-described embodiments can also be implemented and executed by an electric circuit, such as an integrated circuit or a plurality of integrated circuits. An electric circuit designed to implement the functions described in this specification may include a general-purpose processor, digital signal processor (DSP), application specific integrated circuit (ASIC), field programmable gate array (FPGA), or other programmable logic apparatuses, discrete gate or transistor logic, discrete hardware components, or a combination thereof. The general-purpose processor may be a microprocessor, or may be a conventional processor, controller, microcontroller, or state machine. The above-described electric circuit may be configured with a digital circuit or may be configured with an analog circuit. Further, if a new integrated circuit technology emerges that replaces current integrated circuits due to advances in semiconductor technology, one or more aspects of the present disclosure can be implemented using such new integrated circuit technology.

While there have been described what are at present considered to be certain embodiments of the invention, it will be understood that various modifications may be made thereto, and it is intended that the appended claim cover all such modifications as fall within the true spirit and scope of the invention.

## Claims

1. A method of storing print data, comprising:
acquiring print data, and at least one of first identification information and second identification information associated with the print data, the second identification information being different from the first identification information;
distributing the print data acquired to a first folder in accordance with a predetermined distribution rule based on the identification information acquired; and
storing the print data in the first folder.

2. The method of storing print data according to claim 1, wherein the distributing includes creating a folder associated with the identification information as the first folder when the first folder is not present when the print data is acquired.

3. The method of storing print data according to claim 2, wherein the first folder is provided with, as a folder name, an identifier including at least one of the first identification information and the second identification information.

4. The method of storing print data according to claim 1, wherein
the first identification information includes user identification information of a user who owns the print data, and
the second identification information includes apparatus identification information of a terminal device that issues a print request for the print data.

5. The method of storing print data according to claim 4, wherein the first identification information and the second identification information are automatically acquired from the terminal device or acquired as an input value input through a print setting screen.

6. The method of storing print data according to claim 5, wherein when the input value input through the print setting screen cannot be acquired, at least one of the first identification information and the second identification information is automatically acquired from the terminal device.

7. The method of storing print data according to claim 5, wherein when at least one of the first identification information and the second identification information cannot be automatically acquired from the terminal device, the input value input through the print setting screen of the terminal device is acquired as the identification information .

8. The method of storing print data according to claim 1, wherein when any one of the first identification information and the second identification information cannot be acquired, the print data is distributed in accordance with the distribution rule based on the identification information acquired.

9. The method of storing print data according to claim 1, wherein when both the first identification information and the second identification information cannot be acquired, the print data is distributed to a second folder different from the first folder.

10. The method of storing print data according to claim 1, further comprising listing the first folder on a display apparatus, wherein
the first folder that already exists is listed on the display apparatus even when the distribution rule is changed.

11. The method of storing print data according to claim 10, wherein when a function of the distributing is changed from enabled to disabled and again changed from disabled to enabled, the first folder that already exists is again listed on the display apparatus.

12. The method of storing print data according to claim 3, wherein a change instruction for the folder name as the identifier associated with the first folder is received.

13. The method of storing print data according to claim 12, wherein when the change instruction for the folder name is a change instruction for changing to the same name as a folder name of an existing third folder, an inquiry is made to a user as to whether to integrate the first folder and the third folder.

14. A print data storage apparatus (10) comprising:
one or more controllers (11); and
a storage (23), wherein
the one or more controllers (11)
acquire print data, and at least one of first identification information and second identification information associated with the print data, the second identification information being different from the first identification information;
distribute the print data acquired to a first folder stored in the storage (23) in accordance with a predetermined distribution rule based on the identification information acquired; and
store the print data in the first folder.
